# EUROPEAN PATENT APPLICATION

(11) **EP 1 562 192 A2**
(43) Date of publication of application: **10.08.2005**
(21) Application number: 05002124.5
(22) Date of filing: 02.02.2005
(51) Int. Cl.: G11B 17/04

(54) **Disk inserting/ejecting apparatus**

(30) Priority: 05.02.2004 JP 2004028827
(71) Applicant: Pioneer Corporation, Tokyo-to (JP)
(72) Inventor: Mizoguchi, Takashi Pioneer Corporation, Kawagoe-shi Saitama-ken (JP); Togashi, Jun Pioneer Corporation, Kawagoe-shi Saitama-ken (JP); Yasaki, Akira Pioneer Corporation, Kawagoe-shi Saitama-ken (JP); Ono, Yoshitaka Pioneer Corporation, Kawagoe-shi Saitama-ken (JP); Sawada, Nobutaka Pioneer Corporation, Kawagoe-shi Saitama-ken (JP)
(74) Representative: Tappe, Hartmut

(57) **Abstract**

A disk inserting/ej ecting apparatus includes: a disk carrying device (15) which carries a disk between an insertion/ejection slot (10) to/from which a disk is inserted/ejected and a disk driving position; right and left detection levers (21, 22) which come into contact with the disk and move at the time of carrying the disk; and amounting plate (20) in which notches (27a,28a) areformed, the notches (27a,28a) positioning so that the positions of the.right and left detection levers (21,22) before the disk comes into contact with the right and left detection levers (21,22) and the positions of the right and left detection levers (21,22) after contact between the disk and the right and left detection levers (21,22) is cancelled are different from each other.

## Description

### BACKGROUND OF THE INVENTION

### 1.Field of the Invention

The present invention relates to a technical field of a disk drive of, for example, a slot-in loading system. 2.Description of the Related Art

Hitherto, there is a disk playback apparatus of a slot-in loading system disclosed in Japanese Patent Application Laid-Open (JP-A) No. 2001-155401.

The disk playback apparatus reproduces information recorded on a disk and includes : right and left slide levers provided in a disk insertion port and having contact parts which come into contact with the edge of a disk and move so as to be apart from each other; an energizing device for applying an energizing force to the slide levers in the direction of making the contact parts approach each other; a right sensor and a left sensor whose output states change according to the positions of the right and left slide levers; and a disk state determining device which determines an insertion state of a disk in accordance with output states of the right and left sensors.

In short, in the disk playback apparatus disclosed in JP-A No. 2001-155401, output states of the right and left sensors change according to the positions of the right and left slide levers and the insertion state of a disk is determined on the basis of the output states of the right and left sensors.

### SUMMARY OF THE INVENTION

In the disk playback apparatus disclosed in JP-A No. 2001-155401, however, the right and left slide levers are assembled so as to be slidable in the lateral direction and are elastically energized toward the center portion by an extension coil spring as an energizing member. Consequently, the positions of the right and left slide levers before a disk is inserted and those at the time when the contact with the edge of the disk is canceled and the disk is being carried to a drive position for playing are the same.

Therefore, for example, in the case where the power of the disk playback apparatus is interrupted when the disk is being carried toward the drive position and the interrupted power is recovered again, the position of the disk cannot be grasped. Specifically, the disk playback apparatus cannot grasp if the disk is not inserted or the disk is being carried. Consequently, a sensor switch dedicated to detect that a disk is being carried is provided, thereby detecting a disk insertion state. As a result, a problem arises such that the position of a disk cannot be detected without increasing the number of parts.

The invention has been made in consideration of the circumstances and an object of the invention is to provide a disk inserting/ejecting apparatus capable of reliably detecting the position of a disk without increasing the number of parts.

The invention according to claim 1 relates to a disk inserting/ejecting apparatus comprising:
a disk carrying device which carries a disk between an insertion/ejection slot to/from which a disk is inserted/ejected and a disk drive position;
a moving member which comes into contact with the disk and moves at the time of carrying said disk; and
a positioning member for positioning so that the position of said moving member before said disk comes into contact with said moving member and the position of said movingmember after contact between said disk and the moving member is cancelled are different from each other.

### BRIEF DESCRIPTON OF THE DRAWINGS

FIG. 1 is a plan view showing a main part of a disk playback apparatus as an embodiment of the invention;
FIG. 2 is a cross section taken along line A-A of the disk playback apparatus of FIG. 1;
FIG. 3 is a perspective view showing a disk detecting part in FIG. 1;
FIG. 4 is a plan view of FIG. 3;
FIG. 5 is a plan view showing a mounting plate in FIG. 3;
FIG. 6 is a perspective view showing a right detection lever in FIG. 3;
FIGS. 7A to 7D are a rear view, a plan view, a front view, and a right side view, respectively, showing the right detection lever of FIG. 6;
FIGS. 8A and 8B are a plan view and a front view, respectively, of a main part showing operations performed at the time of inserting a disk in the embodiment; and
FIG. 9 is a plan view of a main part showing operations performed at the time of ejecting a disk in the embodiment.

### DESCRIPTION OF THE PREFERRED EMBODIMENTS

An embodiment of the invention will be described below with reference to the drawings.

The embodiment described below relates to the case where the invention is applied to a disk playback apparatus capable of automatically loading and reproducing a disk which is inserted into a slot.

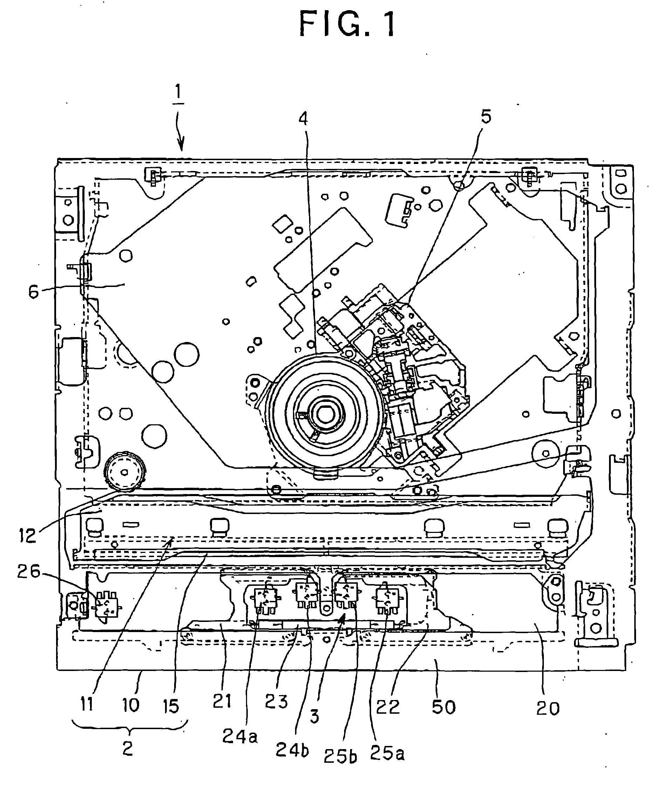

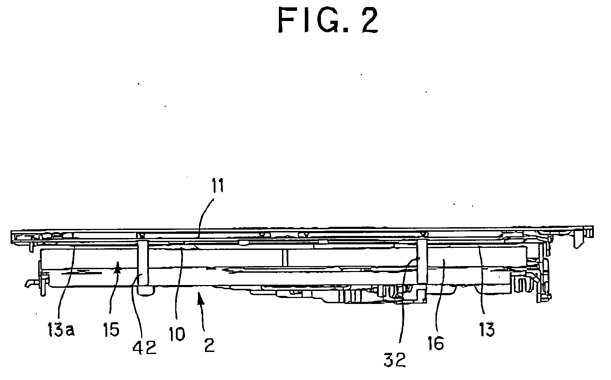

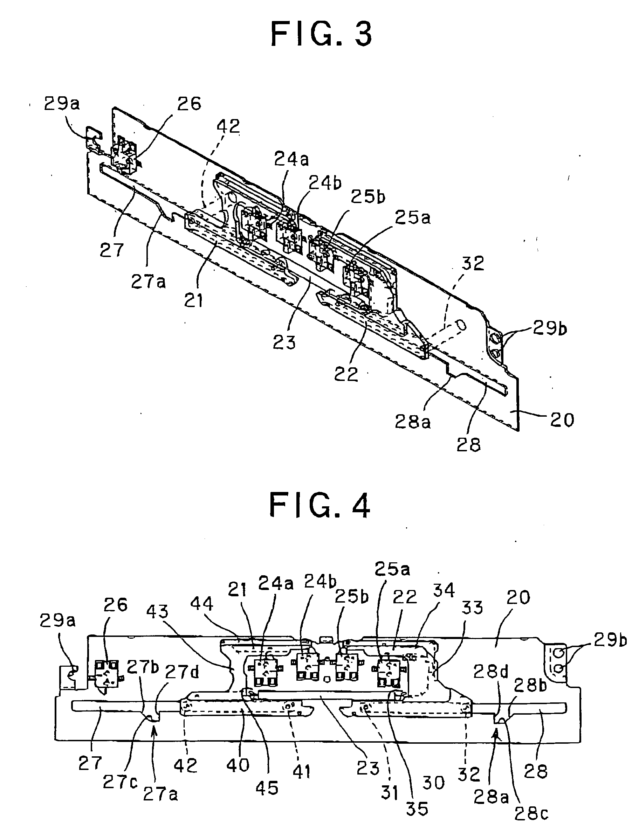

FIG. 1 is a plan view showing a main part of a disk playback apparatus as an embodiment of the invention. FIG. 2 is across section taken along line A-Aof the disk playback apparatus of FIG. 1. FIG. 3 is a perspective view showing a disk detecting part in FIG. 1. FIG. 4 is a plan view of FIG. 3.

As shown in FIG. 1, in a disk playback apparatus 1, mainly, a disk inserting/ejecting part 2, a disk detecting part 3, a disk driving part 4, and a pickup 5 for irradiating a disk with a laser beam, receiving reflection light of the laser beam, and reading data recorded on the disk are attached to a chassis 6.

As shown in FIGS. 1 and 2, the disk inserting/ejecting part 2 is constructed by, roughly, an insertion/ejection slot 10 for inserting/ejecting a disk, a carriage guide 11 as a guide used for carrying a disk, a carriage roller 15 for carrying the disk, and a drive force transmitting mechanism (not shown).

The carriage guide 11 is a guide of a carriage path for inserting or ejecting a disk when the carriage roller 15 is rotated in a state where the disk is sandwiched by the carriage guide 11 and the carriage roller 15. The carriage guide 11 includes a rectangular plate 12 formed by a rectangular plate made of metal and a contact plate 13 (FIG. 2) having a contact face 13a which is integrally joined to the inside of the rectangular plate 12, inclined so that the thickness increases from an almost center portion toward both of the right and left side faces in the diagram (the direction orthogonal to the disk inserting/ejecting directions), and with which the edge of a disk comes into contact at the time of inserting/ejecting the disk. As the material of the contact plate 13, a synthetic resin is used and processed by integral molding. The carriage guide 11 is disposed on the downstream side of the disk insertion direction of the disk inserting/ejecting part 2.

The carriage roller 15 rotates in a state where a disk is sandwiched between the carriage roller 15 and the contact plate 13 of the carriage guide 11 to carry the disk to the drive position. The carriage roller 15 is constructed by a not-shown rotary shaft and a rubber roller 16 attached to the periphery of the rotary shaft. The rubber roller 16 is tapered so that the diameter increases from the center portion toward both ends. The both ends of the rotary shaft are held by bearings and a gear for rotating the carriage roller 15 is fixed to one of the ends.

The gear fixed to the rotary shaft of the carriage roller 15 is connected to a not-shown drive motor and engages with a drive force transmitting mechanism for transmitting the rotational force of the drive motor. Consequently, by switching the rotating direction, the disk can be carried to any of the inserting direction and the ejecting direction. The carriage roller 15, the drive motor, and the drive force transmitting mechanism construct a disk carrying device of the invention.

The carriage roller 15 is elastically held by a not-shown spring member so as to be urged toward the carriage guide 11 (for example, an energizing member such as a torsion spring or an extension coil spring), moves toward an inserted disk at the time of carrying the disk, and forcefully comes into contact with the disk by the elastic force of the spring member. Except for the time of carrying a disk, by switching to cancel the elastic force of the spring member, the carriage roller 15 is apart from the disk.

The disk detecting part 3 is disposed on the upstream side in the disk insertion direction of the disk inserting/ejecting part 2 to detect a disk inserted state or a disk ejected state and whether a disk remains in the disk carriage path or not. The disk detecting part 3 is constructed by a rectangular mounting plate 20, a left detection lever 21 attached to the mounting plate 20, a right detection lever 22 paired with the left detection lever 21, an extension coil spring 23 coupled between the left detection lever 21 and the right detection lever 22, left-side switches 24a and 24b, right-side switches 25a and 25b, a switch 26, and a not-shown controller.

The detection levers 21 and 22 correspond to a moving member of the invention, and the left-side switches 24a and 24b and the right-side switches 25a and 25b correspond to detecting devices of the invention. Since those members are disposed on the right side and the left side in FIGS. 1 to 4 in the embodiment, the detection levers 21 and 22 are called the left detection lever 21 and the right detection lever 22 and the switches are called the left-side switches 24a and 24b and the right-side switches 25a and 25b for convenience' sake. However, the members may be also disposed in the vertical direction. The extension coil spring 23 corresponds to an energizing member of the invention.

The mounting plate 20 is formed in a rectangular plate shape which is almost bilaterally symmetrical as shown in FIGS. 3 to 5. Two elongated guide holes 27 and 28 are provided at a predetermined interval on the same straight line in the longitudinal direction. The left detection lever 21 and the right detection lever 22 are slidably attached to the guide holes 27 and 28, respectively.

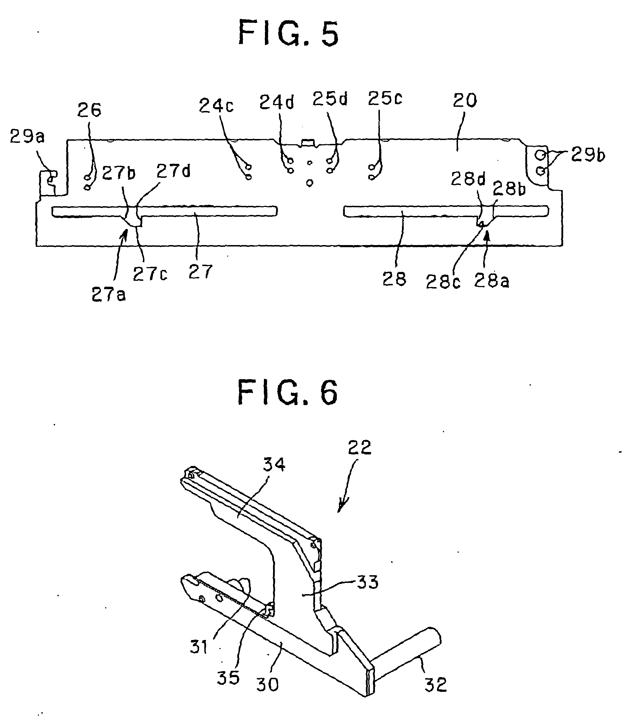

The mounting plate 20 is disposed in the direction orthogonal to the disk inserting/ejecting directions, and notches 27a and 28a in the disk ejecting direction are formed so as to be continued from the guide holes 27 and 28, respectively. By the notches 27a and 28a each formed in an inverted trapezoid shape as shown in FIGS. 4 and 5, the right detection lever 22 and the left detection lever 21 are positioned when a disk is in the drive position. In the notches 27a and 28a, inclined portions 27b and 28b at the left and right ends in the drawings, respectively, contact portions 27c and 28c on the inside, and vertical steps 27d and 28d on the further inside are continuously formed, respectively.

Further, fixing holes 29a and 29b to be fixed to the chassis 6 are formed at both ends in the longitudinal direction of the mounting plate 20.

The mounting plate 20 in which the notches 27a and 28a of the guide holes 27 and 28 are provided has the function of a positioning member for positioning so that the positions of the right and left detection levers 22 and 21, that is, the width of the interval between them at the time when the disk is in the drive position and that at the time when ejection of the disk is completed are different from each other.

In the mounting plate 20, as shown in FIG. 5, two mounting holes 24c and 24d to which the left-side switches 24a and 24b are mounted in a center portion, two mounting holes 25c and 25d to which the right-side switches 25a and 25b are mounted in positions symmetrical with the mounting holes 24c and 24d, and two mounting holes 26a to which the switch 26 is mounted are provided.

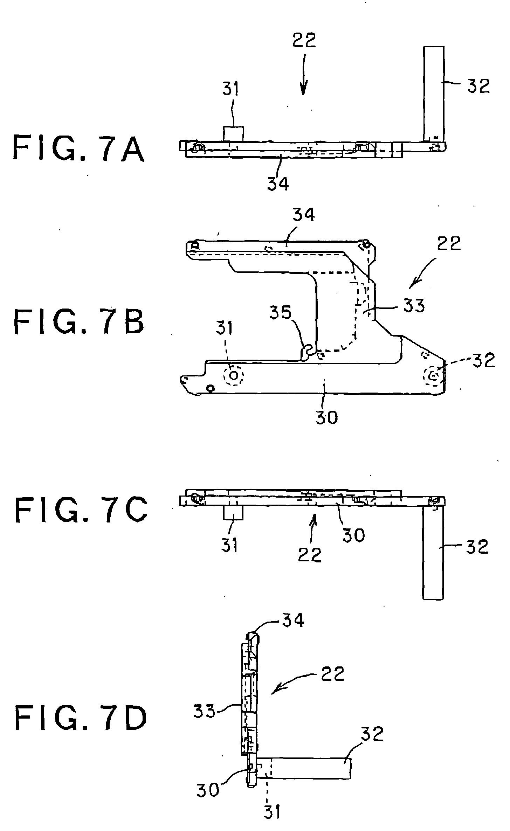

With reference to FIG. 6 and FIGS. 7A to 7D, the structure of the right detection lever 22 will now be described. Since the right detection lever 22 and the left detection lever 21 are almost symmetrical and have similar functions, in FIGS. 6 and 7A to 7D, the right detection lever 22 will be described.

In the right detection lever 22, as shown in FIG. 6, a sliding guide 31 which is inserted in the guide hole 28 and guides sliding of the right detection lever 22 and a disk guide 32 with which the edge of the disk comes into contact are formed at both end portions of one side of a base part 30. The base part 30 is formed integrally with a switch depressing part 34 via a link part 33. The switch depressing part 34 is formed almost at the right angle from the link part 33 and in dimensions so as to be able to come into contact with operation pieces of the right-side switches 25a and 25b when the right detection lever 22 is attached to the guide hole 28. Near the link part 33 of the base part 30, a retainingpart 35 for retaining one end of the extension coil spring 23 is formed in a hook shape.

On the other hand, in the left detection lever 21, as shown in FIG. 4, in a manner similar to the right detection lever 22, a sliding guide 41 which is inserted in the guide hole 27 and guides sliding of the left detection lever 21 and a disk guide 42 with which the edge of a disk comes into contact are formed at both end portions of one side of a base part 40. The base part 40 is formed integrally with a switch depressing part 44 via a link part 43. The switch depressing part 44 is formed almost at the right angle from the link part 43 and in dimensions so as to be able to come into contact with operation pieces of the left-side switches 24a and 24b when the left detection lever 21 is attached to the guide hole 27. Near the link part 43 of the base part 40, a retaining part 45 for retaining the other end of the extension coil spring 23 is formed in a hook shape.

The left-side switches 24a and 24b and the right-side switches 25a and 25b are switches of the same specifications and are mechanical switches which are turned on/off when the operation pieces projected from the switch bodies are depressed. The left-side switches 24a and 24b and the right-side switches 25a and 25b are mounted in symmetrical positions in a center portion of the mounting plate 20 so as to come into contact with the switch depressing parts 44 and 34 of the left detection lever 21 and the right detection lever 22, respectively.

The disk detecting part 3 turns on/off the left-side switches 24a and 24b, the right-side switches 25a and 25b, and the switch 26 in accordance with the positions of the left detection lever 21 and the right detection lever 22 (a change in positions of the left detection lever 21 and the right detection lever 22 between the case where the disk is in the drive position and the case where the disk ejection is completed, a change in the position along the edge when the disk is carried in contact with the right and left detection levers 22 and 21, a change in positions due to variations in the disk diameters, a change in positions due to deviated insertion of a disk, and the like), and detects the state of the disk with a combination of the on/off state of the switches The rotating direction of the carriage roller 15 is controlled by the controller to insert or eject a disk.

Next, assembly of the right and left detection levers 22 and 21 will be described.

The left-side switches 24a and 24b, the right-side switches 25a and 25b, and the switch 26 are inserted to the mounting holes 24c and 24d, the mounting holes 25c and 25d, and the mounting hole 26a, respectively, which are provided in the mounting plate 20.

Next, the sliding guide 41 and the disk guide 42 of the left detection lever 21 are slidably inserted in the guide hole 27 and, after that, the sliding guide 31 and the disk guide 32 of the right detection lever 22 are slidably inserted in the guide hole 28. The attaching order of the left detection lever 21 and the right detection lever 22 may be opposite, and the attaching order of the left-side switches 24a and 24b, right-side switches 25a and 25b, the switch 26, and the left detection lever 21 and the right detection lever 22 may be also opposite.

The mounting plate 20 to which the left-side switches 24a and 24b, right-side switches 25a and 25b, switch 26, left detection lever 21, and right detection lever 22 are attached in this manner is fixed on the upstream side in the disk inserting direction of the disk inserting/ej ecting part 2 in the chassis 6 by using fixing holes 29a and 29b, thereby constructing the disk detecting part 3.

Ends of the extension coil spring 23 are retained by the retaining part 35 of the right detection lever 22 and the retaining part 45 of the left detection lever 21. Subsequently, as shown in FIG. 1, portions of the base part 30 and the switch depressing part 34 of the right detection lever 22 and the base part 40 and the switch depressing part 44 of the left detection lever 21 are covered with a cover 50, thereby assembling the right and left detection levers 22 and 21 so as to prevent lifting of the right and left detection levers 22 and 21.

Next, the positional relations among the right and left detection levers 22 and 21, left-side switches 24a and 24b, right-side switches 25a and 25b, and switch 26 will be described. Specifically, the positional relations among the right and left detection levers 22 and 21 and the right-side and left-side switches 25a and 25b and 24a and 24b are as follows.
1) After completion of ejection of a disk, when the contact between the disk and the disk guides 32 and 42 of the right and left detection levers 22 and 21 is cancelled and no disk is inserted, as show in FIGS. 1 and 3, the switch depressing parts 34 and 44 of the right and left detection levers 22 and 21 presses the operation pieces of the right-side switches 25a and 25b and the left-side switches 24a and 24b, so that the right-side switches 25a and 25b and the left-side switches 24a and 24b are turned on.
2) In a state where the disk guides 32 and 42 of the right and left detection levers 22 and 21 are in contact with a disk and are open, the switch depressing parts 34 and 44 of the right and left detection levers 22 and 21 move apart from the left-side switches 24a and 24b and the right-side switches 25a and 25b, and the switches are turned off.
3) When the contact between the disk and the right and left detection levers 22 and 21 is canceled and the disk is being carried toward the drive position, when the disk is being carried from the drive position toward the disk inserting/ejecting part 2, and when the disk is in the drive position (completion of insertion, at the time of play), the switch depressing parts 34 and 44 of the right and left detection levers 22 and 21 are moved away from the right-side switches 25a and 25b and the left-side switches 24a and 24b, and the switches are turned off.

The right and left detection levers 22 and 21 are assembled to the front face part of the chassis 6 so as to be slidable in the lateral directions and are elastically energized toward the center portion by the extension coil spring 23.

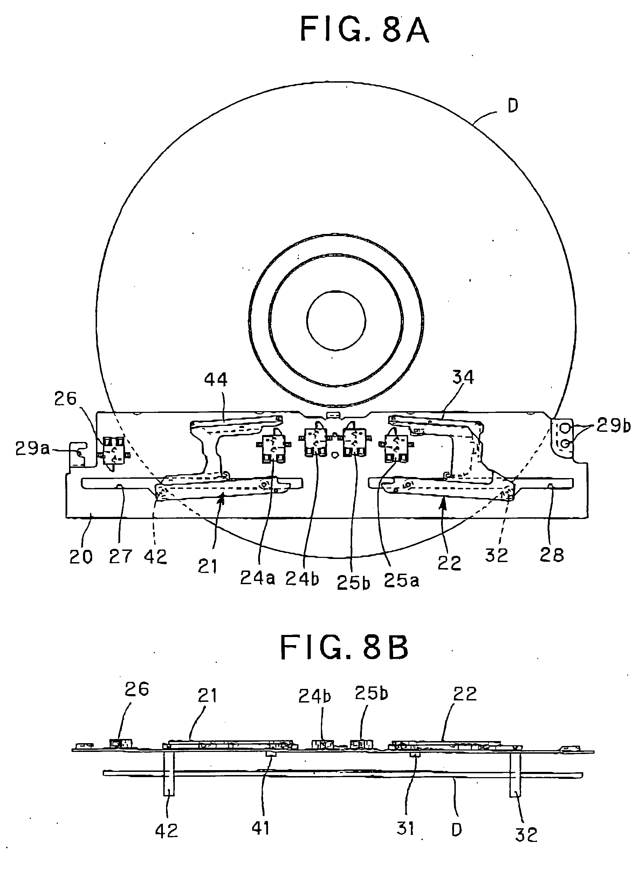

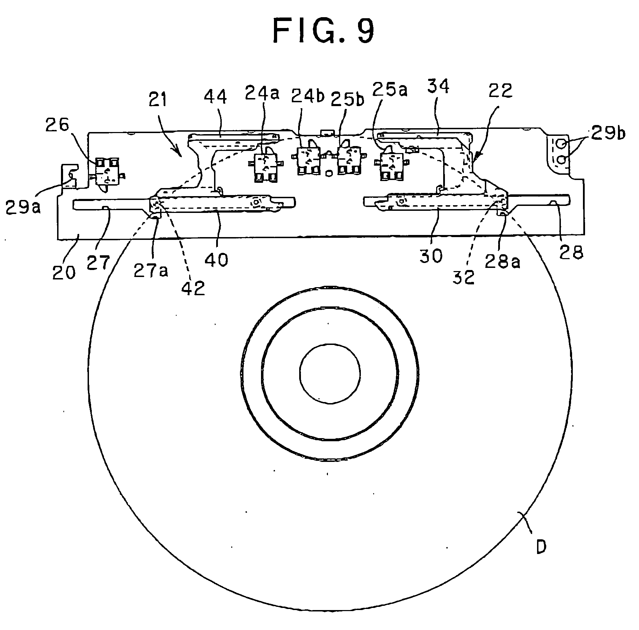

The disk inserting/ejecting operation will be described with reference to FIGS. 8A and 8B and FIG. 9. FIGS. 8A and 8B are a plan view and a front view, respectively, of a main part showing operations performed when a disk is inserted and FIG. 9 is a plan view of a main part showing operations performed when a disk is ejected. In FIGS. 8A and 8B and FIG. 9, the extension coil spring 23 is not shown.

First, an operation of inserting a disk D having a diameter of 12 cm (hereinbelow, called a 12-cm disk D) will be described by referring to FIGS. 8A and 8B.

When the 12-cm disk D is inserted from the disk inserting/ejecting part 2, the edge of the 12-cm disk D comes into contact with the disk guides 32 and 42 of the right and left detection levers 22 and 21 and moves the right and left detection levers 22 and 21 so as to be widened while being slid in the lateral direction. The switch depressing parts 34 and 44 of the right and left detection levers 22 and 21 move apart from the right-side and left-side switches 25b and 24b, respectively, thereby turning off the switches, and the carriage roller 15 for carrying a disk forcedly pressed against the carriage guide 11 starts rotating. As the 12-cm disk D is carried, the right and left detection levers 22 and 21 are opened, the switch depressing parts 34 and 44 of the right and left detection levers 22 and 21 move apart from the right-side and left-side switches 25a and 24a, and the right-side and left-side switches 25a and 24a are turned off. The end of the base part 40 of the left detection lever 21 presses the operation piece of the switch 26, and the switch 26 is turned on.

In such switch states, insertion of the 12-cm disk D is determined.

When the 12-cm disk D is further carried, since the edge of the 12-cm disk D is in contact with the disk guides 32 and 42 of the right and left detection levers 22 and 21, the 12-cm disk D is carried while making the right and left detection levers 22 and 21 slide in the lateral direction. After the edge part corresponding to the maximum diameter of the 12-cm disk D passes through the disk guides 42 and 32, the right and left detection levers 22 and 21 move to the inner side by the elastic force of the extension coil spring 23 along the edge of the 12-cm disk D. According to the operation, the switch 26 is turned off. Even when the contact between the 12-cm disk D and the right and left detection levers 22 and 21 is canceled, the off state in which the switch depressing parts 34 and 44 of the right and left detection levers 22 and 21 are apart from the right-side and left-side switches 25a and 25b and 24a and 24b remains, as shown in Fig. 8. When it is detected that the 12-cm disk is carried to the drive' position and a not-shown clamp mechanism starts operating, the rotation of the carriage roller 15 is stopped.

When the 12-cm disk D is carried to the drive position (position of a play unit), the disk guides 42 and 32 receive the reaction force from the disk D and are suited from the guide holes 27 and 28 into the notches 27a and 28a, respectively. Since the disk guide 42 of the left detection lever 21 receives energizing force to the right by the elastic force of the extension coil spring 23 and the disk guide 32 of the right detection lever 22 receives energizing force to the left by the elastic force of the extension coil spring 23, even when the disk D is further moved to the drive position (the position of the play unit), the disk guides 42 and 32 do not move from the notches 27a and 2Ba, respectively. Therefore, after the contact between the disk D and the right and left detection levers 22 and 21 is cancelled, the switch depressing parts 34 and 44 do not turn on the right and left switches 25a and 25band24aand24b, respectively. Consequently, the state of the disk, specifically, the state in which the disk is at least inserted and being carried toward the drive position can be detected.

Next, the not-shown disk clamper descends to fix the 12-cm disk D to the disk driving part 4. At the same time, the carriage roller 15 moves apart from the 12-cm disk D. The disk driving part 4 rotates and information recorded on the 12-cm disk D is reproduced or recording is performed.

Although the 12-cm disk D has been described above, similar operations can be performed for a disk D having a diameter of 8 cm (hereinbelow, called an 8-cm disk D). When the 8-cm disk D is inserted from the disk inserting/ejecting part 2 in such a manner that the center of the 8-cm disk D matches the center of the insertion/ejection slot 10, the edge of the 8-cm disk D comes into contact with the disk guides 32 and 42 of the right and left detection levers 22 and 21, respectively, moves the right and left levers 22 and 21 so as to be widened while being slid in the lateral direction. The switch depressing parts 34 and 44 of the right and left detection levers 22 and 21 move apart from the right-side and left-side switches 25b and 24b, respectively, thereby turning off the switches, and the carriage roller 15 for carrying a disk forcedly pressed against the carriage guide 11 starts rotating. As the 8-cm disk D is carried, the right and left detection levers 22 and 21 are opened, the switch depressing parts 34 and 44 of the right and left detection levers 22 and 21 are apart from the right-side and left-side switches 25a and 24a, and the right-side and left-side switches 25a and 24a are turned off. In the case of the 8-cm disk D, the diameter is smaller than that of the 12-cm disk D, so that the 8-cm disk D does not press the operation piece of the switch 26. Therefore, the switch 26 remains off. When the switch 26 is not turned on in such a switch state, specifically, the state where the right-side switches 25a and 25b and the left-side switches 24a and 24b are in the off state, insertion of the 8-cm disk D is determined.

When the 8-cm disk D is further carried, since the edge of the 8-cm disk D is in contact with the disk guides 32 and 42 of the right and left detection levers 22 and 21, the 8-cm disk D is carried while making the right and left detection levers 22 and 21 slide to the right and left, respectively. After the edge part corresponding to the maximum diameter of the 8-cm disk D passes through the disk guides 42 and 32, the right and left detection levers 22 and 21 move to the inner side by the elastic force of the extension coil spring 23 along the edge of the 8-cm disk D. Even when the contact between the 8-cm disk D and the right and left detection levers 22 and 21 is canceled, the off state in which the switch depressing parts 34 and 44 of the right and left detection levers 22 and 21 are apart from the right-side and left-side switches 25a and 25b and 24a and 24b remains. When it is detected that the 8-cm disk is carried to the drive position and a not-shown clamp mechanism starts operating, rotation of the carriage roller 15 is stopped.

When the 8-cm disk D is carried to the drive position (the position of a play unit), the disk guides 42 and 32 receive the reaction force from the disk D and are suited from the guide holes 27 and 28 into the notches 27a and 28a, respectively. Since the disk guide 42 of the left detection lever 21 receives energizing force to the right by the elastic force of the extension coil spring 23 and the disk guide 32 of the right detection lever 22 receives energizing force to the left by the elastic force of the extension coil spring 23, even when the 8-cm disk D is further moved to the drive position (the position of the play unit), the disk guides 42 and 32 do not move from the notches 27a and 28a, respectively. Therefore, after the contact between the 8-cm disk D and the right and left detection levers 22 and 21 is cancelled, the switch depressing parts 34 and 44 do not turn on the right and left switches 25a and 25b and 24a and 24b, respectively. Consequently, the state of the disk, specifically, the state in which the 8-cm disk is at least inserted and being carried toward the drive position can be detected.

Next, the not-shown disk clamper descends to fix the 8-cm disk D to the disk driving part 4. At the same time, the carriage roller 15 moves apart from the 8-cm disk D. The disk driving part 4 rotates and information recorded on the 8-cm disk D is reproduced or recording is performed.

The 12-cm or 8-cm disk D is identified in accordance with the state (on or off) of the switch 26 and, according to the identification, for example, driving control for a not-shown spindle motor for driving the disk D is performed.

An operation of ejecting the disk D will now be described with reference to FIG. 9.

To eject the disk D, a not-shown eject button is pressed. The carriage roller 15 moves toward the disk D and the disk D is sandwiched between the carriage roller 15 and the carriage guide 11. At the same time, the disk clamper rises and the clamp state of the disk D is cancelled. After the clamp state of the disk D is cancelled, the carriage roller 15 rotates and the disk D is carried toward the disk inserting/ejecting part 2.

When the disk D is carried, the edge of the disk D comes into contact with the disk guides 32 and 42 of the right and left detection levers 22 and 21, the disk D moves the right and left detection levers 22 and 21 so as to be widened while being slid to the right and left, respectively. At this time, the disk guides 42 and 32 receive the force from the disk D and slide along the inclined portions 27b and 28b of the notches 27a and 28a into the guide holes 27 and 28. Further, when the maximum diameter portion of the disk passes through the disk guides 42 and 32, the right and left detection levers 22 and 21 move along the outer shape of the disk D to the inner side by the elastic force of the extension coil spring 23.

When the disk D is carried toward the disk inserting/ejecting part 2, the disk guides 32 and 42 of the right and left detection levers 22 and 21 receive the reaction force from the disk D and are not therefore fit in the notches 28a and 27a. When the disk D is further carried toward the disk inserting/ejecting part 2, the disk guides 32 and 42 slide to the inner ends of the guide holes 28 and 27, respectively, so that the right and left detection levers 22 and 21 move to the positions of FIGS. 1 and 3.

When the disk D is carried to the predetermined position, the switch depressing parts 34 and 44 of the right and left detection levers 22 and 21 press the operation pieces of the right-side switches 25a and 25b and the left-side switches 24a and 24b, and the switches are turned on. In the case where the disk D is a 12-cm disk, the operation piece of the switch 26 is pressed and the switch 26 is turned on. Further, when the switch 26 is turned off by movement of the right and left detection levers 22 and 21, the carriage roller 15 stops. In the case where the disk D is an 8-cm disk, when at least one of the right and left switches 25a and 24a is turned off, the carriage roller 15 stops.

As described above, also in the operation of ejecting the disk D, the state before the disk D comes into contact with the right and left detection levers 22 and 21, that is, at least the state where the disk D is being carried toward the disk inserting/ejecting part 2 can be detected.

As described above, in the disk playback apparatus 1 of the embodiment, the right and left detection levers 22 and 21 are positioned in the notches 28a and 27a in the mounting plate 20 so that the positions of the right and left detection levers 22 and 21 are varied between the case where the right and left detection levers 22 and 21 provided at the insertion/ejection slot 10 slide when the disk D is carried, the edge of the disk D comes into contact with the right and left detection levers 22 and 21, and the disk D is carried to the drive position or the disk inserting/ejecting part 2 and the case where the disk D is in the drive position, and the case where the disk D is not inserted and the case where ejection of the disk D is completed. Consequently, it is unnecessary to provide a dedicated sensor switch for detecting at least the time when the disk D is carried. Thus, the position of the disk D can be detected with reliability without increasing the number of parts.

The invention is not limited to the foregoing embodiment but can be variously modified.

For example, although the right and left detection levers 22 and 21 sliding linearly have been described in the foregoing embodiment, the invention is not limited to the configuration. For example, each of the right and left detection levers 22 and 21 may turn by using one end of the detection lever as a fulcrum. In this case, a plurality of switches are disposed at the other end side of the detection lever and positioning is performed while varying the positions of the detection levers which turn so that the on/off state of the switch before the disk comes into contact with the detection levers and the on/off state of the switch after the contact state between the disk and the detection levers is cancelled are different from each other.

Although mechanical switches which are turned on or off when the operation piece projected from the switch body is depressed are used as the right-side switches 25a and 25b and the left-side switches 24a and 24b as the detecting device in the embodiment, the invention is not limited to the mechanical switches but the detecting device obtained by a combination of a light emitting element and a light receiving element may be also employed.

Further, although the extension coil spring 23 is used as the energizing device in the foregoing embodiment, the other springs or rubbers may be also employed.

Although the example of applying the invention to the disk playback apparatus has been described in the foregoing embodiment, the invention is not limited to the embodiment but can be applied to a disk recording apparatus.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. A disk inserting/ejecting apparatus **characterized in that** it comprises:
a disk carrying device (16) which carries a disk between an insertion/ejection slot (10) to/from which a disk is inserted/ejected and a disk drive position;
a moving member (21,22) which comes into contact with the disk and moves at the time of carrying said disk; and
a positioning member (27a,28a) for positioning so that the position of said moving member (21,22) before said disk comes into contact with said moving member (21, 22) and the position of saidmovingmember (21, 22) after contact between said disk and the moving member (21,22) is cancelled are different from each other.

2. The disk inserting/ejecting apparatus according to clam 1,
wherein said moving member (21,22) is right and left detection levers (21,22) which are moved while the edge of the disk comes into contact with the right and left detection levers at the time of carrying said disk, and said positioning member (27a,28a) performs positioning so that the width of an interval between said right and left detection levers (21,22) before said disk comes into contact with said right and left detection levers (21, 22) and the width of the interval after contact between said disk and said right and left detection levers (21,22) is cancelled are different from each other.

3. The disk inserting/ejecting apparatus according to claim 1,
further comprising a detector (24a, 24b; 25a, 25b) for detecting that at least said disk is being carried toward the drive position on the basis of the position of said moving member (21,22).

4. The disk inserting/ejecting apparatus according to claim 3,
wherein said detector (24a,24b;25a,25b) is a right-side switch (25a,25b) and a left-side switch (24a,24b) which are turned on/off by depression of operation pieces, and detects that the disk is being carried toward a drive position on the basis of the positions of the right and left detection levers (21,22) by the right-side switch (25a,25b) and the left-side switch (24a,24b).

5. The disk inserting/ejecting apparatus according to claim 2,
further comprising an energizing member (23) which energizes the right and left detection levers (21,22) to a positioning direction when positioning is performed so that the width of the interval between said right and left detection levers (21,22) varies.
